# EUROPÄISCHE PATENTSCHRIFT

(11) **EP 0 360 899 B1**
(45) Veröffentlichungstag und Bekanntmachung des Hinweises auf die Patenterteilung: **04.08.1993**
(21) Anmeldenummer: 88116010.5
(22) Anmeldetag: 28.09.1988
(51) Int. Cl.: G06F 5/06

(54) **Warteschlange, bestehend aus mehreren Speicherelementen**
Queue comprising a plurality of memory elements
File d'attente comprenant plusieurs éléments de mémoire

(43) Veröffentlichungstag der Anmeldung: 04.04.1990
(73) Patentinhaber: Siemens Nixdorf Informationssysteme Aktiengesellschaft, 33102 Paderborn (DE)
(72) Erfinder: Hülters, Hubert, D-8152 Feldkirchen/Westerham (DE)
(74) Vertreter: Fuchs, Franz-Josef, Dr.-Ing.

(56) Entgegenhaltungen:
- IBM TECHNICAL DISCLOSURE BULLETIN, Band 22, Nr. 10, März 1980, Seiten 4749-4752, New York, US; A.M. SHANKLAND et al.: "Storage of documents in a direct-access storage device"

## Beschreibung

Die Erfindung betrifft eine Warteschlange, bestehend aus mehreren Speicherelementen zur Zwischenspeicherung von an einen Empfänger weiterzuleitenden Informationen und einer Steuerung für die Ein- und Ausspeicherung der Informationen, wobei die Informationen in der Reihenfolge ihrer Zwischenspeicherung weitergeleitet werden (FIFO-Prinzip).

Warteschlangen finden als Zwischenspeicher und Zubringer für Einrichtungen der Datenverarbeitung oder der Prozeßsteuerung vielfach Anwendung, um meistens von mehreren Quellen stammende und für eine gemeinsame Senke bestimmte Informationen der Reihe nach bearbeiten zu können.

Zur Realisierung solcher Warteschlangen werden in der Regel normale Zugriffsspeicher mit zyklischer Ansteuerung der einzelnen Speicherabschnitte durch getrennte, als zyklische Zähler arbeitende Adressengeber für die Ein- und die Ausspeicherung oder aber Schieberegister mit einer Steuerung verwendet, die die einer Eingangsstufe nacheinander zugeführten Informationen selbsttätig von Stufe zu Stufe zur jeweils nächsten freien Registerstufe weiterleitet, bis die Ausgangsstufe erreicht ist. Zusätzliche Bestandteile der jeweils zugehörigen Steuerung sind Statusindikatoren zur Überwachung des "Leer"- oder "Voll"-Zustandes des Speichers sowie Sperrschaltungen zur Entkopplung der Ein- und Ausspeichervorgänge bei asynchronem Betrieb und zur Verhinderung des Überholens der aktuellen Ausspeicherstufe bei zyklisch arbeitenden Zugriffsspeichern.

Der Steuerungsaufwand für derartige Warteschlangen ist verhältnismäßig groß - man siehe hierzu z.B. die Einleitung zur DE-PS 34 31 785.

Es ist daher Aufgabe der Erfindung, eine Warteschlange der eingangs genannten Art zu schaffen, bei der die Steuerung in einfacherer Weise möglich ist und die Möglichkeit einer dynamischen Erweiterung der Anzahl der benötigten Warteschlangenelemente ohne große Rückwirkung auf die übrige Steuerung besteht.

Diese Aufgabe wird durch die kennzeichnenden Merkmale des Patentanspruches 1 gelöst.

Danach wird aus in einer Speichereinheit frei verfügbaren Speicherelementen, die in an sich bekannter Weise über Vorwärts-und Rückwärtsadressen zu einer Ringkette verknüpft sind, ein zyklisch arbeitender Zugriffsspeicher nachgebildet. Zusätzlich weist jedes Speicherelement ein Steuereintragsfeld auf, das bei einem nachfolgenden, zur Aufnahme von Informationen bereiten Speicherelement der Kette immer entsprechend dem Eintrag im Adresseneintragsfeld für die Vorwärtsverknüpfung auf dieses nächste freie Speicherelement verweist. Dabei wird das jeweils nächste, zur Einspeicherung bereite Speicherelement durch einen Eintragszeiger und das jeweils nächste, zur Ausspeicherung anstehende belegte Speicherelement durch einen Austragszeiger markiert. Nach jeder Einspeicherung bzw. Ausspeicherung wird der zugehörige Zeiger auf die Adresse für das jeweils nächste Speicherelement in der Ringkette eingestellt, wobei die neue Adresse unmittelbar aus dem Adresseneintragsfeld für die Vorwärtsverknüpfung des bedienten Speicherelements entnommen werden kann. Zur Adressenverwaltung sind also keine zusätzlichen, zyklisch arbeitenden Ein- und Ausgabezähler erforderlich.

Weiterhin folgt aus der Tatsache, daß ein durch den Austragszeiger gekennzeichnetes Speicherelement n zur Einspeicherung nur über das diesem Speicherelement vorausgehende Speicherelement n-1 erreicht werden kann, daß der Sperreintrag immer dem Speicherelement n-2 zugeordnet ist, da das Speicherelement n-1 den Zugang zum Speicherelement n sicherstellen muß, bevor ein Ausspeichervorgang eingeleitet werden kann. Nach der Ausspeicherung verschiebt sich dann mit der Umstellung des Austragszeigers auch der Sperreintrag zum nächsten Speicherelement und wandert so als Überholsperre hinter dem jeweils zur Ausspeicherung anstehenden Speicherelement hinterher. Ein Überholen des Austragszeigers durch den Eintragszeiger wird dadurch automatisch verhindert. Läuft daher der Eintragszeiger auf ein Speicherelement mit Sperreintrag auf, wirkt dieser wie eine "Voll"-Kennzeichnung und verhindert weitere Einspeicherungen, bis durch eine nachfolgende Ausspeicherung wieder ein Speicherelement freigeworden ist.

Das Weiterreichen des Sperreintrages von Speicherelement zu Speicherelement kann dabei in einfacher Weise anhand der Adresseneinträge ausgehend vom durch den Austragszeiger gekennzeichneten Speicherelement vorgenommen werden.

Ob eine Ausspeicherung nach Aufruf derselben erfolgen kann, hängt in bekannter Weise allein davon ab, ob vorher eine Einspeicherung erfolgt ist. Dies kann anhand des Austragszeigers durch Prüfen des Datenfeldes des zugehörigen Speicherelements erfolgen. Vorteilhafter ist dagegen ein zu Beginn des Datenfeldes vorgesehenes Eintragsfeld zur Kennzeichnung des "Frei"- oder "Belegt"-Zustandes. In jedem Fall zeigt ein nicht belegtes Datenfeld zugleich an, daß die gesamte Warteschlange leer ist. Das ist besonders vorteilhaft, wenn gegebenenfalls mehrere Warteschlangen nacheinander auf das Vorliegen einer Einspeicherung zu überprüfen sind.

Weiterhin ist es von Vorteil, wenn unmittelbar nach Wirksamwerden einer Ausspeicherung zunächst der Sperreintrag umgetragen wird, bevor die eigentliche Weiterleitung der zwischengespeicherten Information erfolgt. Das bisher durch den Sperreintrag gesperrte Speicherelement steht damit frühzeitiger zu einer Entgegennahme einer weiteren Einspeicherungsanforderung zur Verfügung, so daß die Gefahr, daß eine Einspeicherungsanforderung abgewiesen muß, verringert wird. Dies ist insbesondere dann von Vorteil, wenn Ausspeicherungs- und Einspeicherungsvorgänge überlappend ausgeführt werden.

Das neue Lösungsprinzip eignet sich insbesondere für gemäß Patentanspruch 4 dynamisch durch Einketten neuer Speicherelemente erweiterbare Warteschlangen, wenn durch den Eintragszeiger ein Speicherelement mit Sperreintrag angesteuert wird. Der Sperreintrag verhindert dann nicht die gewünschte Zwischenspeicherung, sondern führt zur Einkettung eines neuen Speicherelementes nach dem gesperrten Speicherelement, wobei das neue Speicherelement den Sperreintrag übernimmt und damit das bisher gesperrte Speicherelement zur Zwischenspeicherung freigibt, sobald durch Anpassung der Adresseneinträge in den betroffenen Speicherelementen die Kettenverknüpfung wieder hergestellt ist.

In gleicher Weise wie die dynamische Erweiterung ist auch eine dynamische Verkürzung der Warteschlangen möglich. Ist nämlich das auf das zuletzt freiwerdende Speicherelement folgende Speicherelement frei, dann ist in der gesamten Warteschlange keine weiterzuleitende Information mehr gespeichert. Das freiwerdende Speicherelement kann daher ausgegliedert werden, wenn die Warteschlange nicht bereits auf die Mindestanzahl von zwei Kettengliedern zusammengeschrumpft ist, was in einfacher Weise durch Vergleich von Adresseneinträgen überprüft werden kann.

Einzelheiten der Erfindung seien nachfolgend anhand von in der Zeichnung dargestellten Ausführungsbeispielen erläutert. Im einzelnen zeigen:
- FIG 1: aus drei Speicherelementen bestehende Warteschlange im Ausgangszustand,
- FIG 2: die Warteschlange von FIG 1 nach Belegung von zwei Speicherelementen und nach Beginn der ersten Weiterleitung,
- FIG 3: die Warteschlange von FIG 2 nach Beginn der zweiten Weiterleitung,
- FIG 4: die Warteschlange von FIG 2 nach Beginn der ersten Weiterleitung und nach der durch die vierte Zwischenspeicherungsanforderung vorgenommenen Erweiterung,
- FIG 5: die Warteschlange von FIG 4 nach Beginn der ersten Weiterleitung und nach der durch die fünfte Zwischenspeicherungsanforderung vorgenommenen Erweiterung und
- FIG 6: ein Flußdiagramm zur Erläuterung der notwendigen Adresseneintragsänderungen beim Eingliedern eines neuen Speicherelementes in die bestehende Warteschlange.

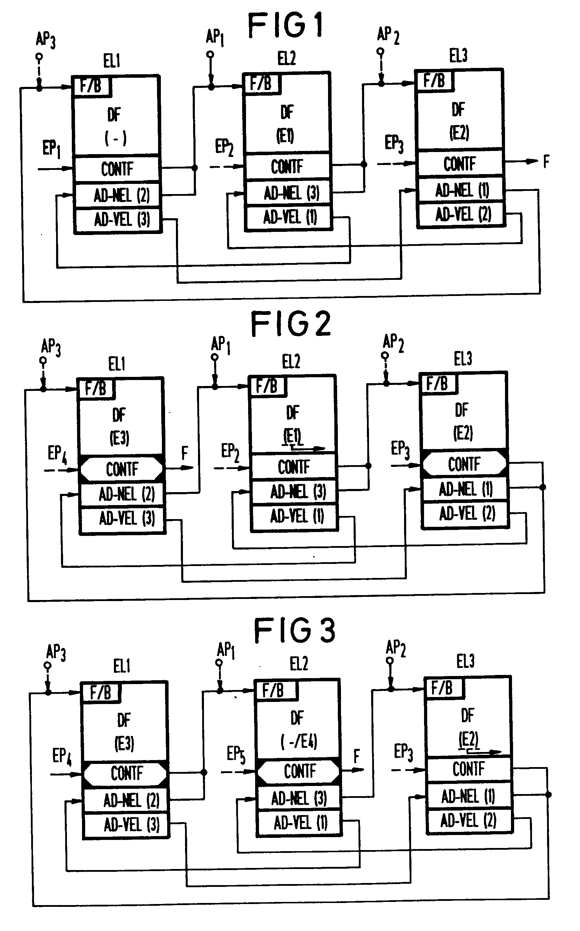

FIG 1 zeigt eine aus drei Speicherelmenten EL1 bis EL3 bestehende Warteschlange. Jedes Speicherelement weist neben dem eigentlichen Datenfeld DF für die jeweils zwischenzuspeichernde Information drei Eintragsfelder auf, nämlich ein Adresseneintragsfeld für die Adresse AD-NEL, die auf den Beginn des Datenfeldes des in Vorwärtsrichtung verknüpften, jeweils nachfolgenden Speicherelementes verweist, ein Adresseneintragsfeld für die Adresse AD-VEL, die auf das Adresseneintragsfeld im vorangehenden Speicherelement verweist, und ein Steuereintragsfeld CONTF. Dieses Steuereintragsfeld enthält entweder die Adresse AD-NEL aus dem zugehörigen Adresseneintragsfeld für die Vorwärtsverknüpfung und verweist damit auf das nächste zur Zwischenspeicherung von Informationen bereite Speicherelement, oder es enthält einen Sperreintrag F, der das Ende der belegbaren Warteschlange anzeigt und zur Abweisung einer weiteren Zwischenspeicherungsanforderung führt.

In allen, die Darstellung einer Warteschlange treffenden Figuren sind die Ziele dieser Einträge durch entsprechende Verbindungspfeile zwischen den Speicherelementen EL... verdeutlicht, während die in Klammern gesetzten Ziffern in den einzelnen Adresseneintragsfeldern den Nummern, z.B. 1 bis 3 der betreffenden Speicherelemente, z.B. EL1 bis EL3, entsprechen.

Am Anfang der Datenfelder DF ist jeweils noch ein Eintragsfeld F/B für die Kennzeichnung des "Frei"- bzw. "Belegt"-Zustandes vorgesehen, um die Überprüfung des Belegtzustandes zu vereinfachen.

Der Eintragszeiger EP... ist jeweils auf das Steuereintragsfeld CONTF gerichtet, während der Austragszeiger AP... jeweils auf den Beginn des Datenfeldes DF gerichtet ist, wobei die jeweilige Adresse sich jeweils aus der Adresse für das Speicherelement und einer entsprechenden Distanzadresse ergibt.

Da der Eintragszeiger EP1 für die erste Zwischenspeicherungsanforderung auf das Speicherelement EL1 zeigt, ist der Austragszeiger AP1 für die erste Ausspeicherung auf das Speicherelement EL2 gerichtet, und das Speicherelement EL3 führt demzufolge den Sperreintrag F. Folglich wird bei der ersten Zwischenspeicherungsanforderung über den aktuellen Eintragszeiger EP1 das Speicherelemente EL2 belegt, was durch den zusätzlichen Eintrag (E1) im zugehörigen Datenfeld DF angezeigt ist, während bei der zweiten Zwischenspeicherungsanforderung über den Eintragszeiger EP2 das Speicherelement EL3 belegt wird. Würde danach eine dritte Zwischenspeicherungsanforderung eintreffen, bevor das erste belegte Speicherelement EL2 wieder frei ist, dann würde wegen des über den aktuellen Eintragszeiger EP3 erreichbaren Sperreintrags F dieser wirksam und die Anforderung abgewiesen, weil die Warteschlange über kein belegbares Speicherelement mehr verfügt.

Zwar ist das Speicherelement EL1 noch frei. Dieses muß aber frei bleiben, damit nach einem Leerwerden der Warteschlange der aktuelle Eintragszeiger EP... immer auf das Vorgängerelement zum aktuellen Austragszeiger AP... zeigt, um eine sichere Arbeitsweise der Warteschlange zu gewährleisten. Andernfalls müßte man wie bei den bekannten Anordnungen gesonderte Maßnahmen zur Schaffung einer Überholsperre ergreifen.

Um dennoch über dieses freie Speicherelement, z.B. EL1, früher, d.h. vor Abschluß der dieses Element zur Belegung freigebenden Ausspeicherung, verfügen zu können, erfolgt die Freigabe bereits zu Beginn einer einzuleitenden Ausspeicherung. Dies ist in FIG 2 angedeutet.

Beim zuerst belegten Speicherelement EL2 ist die Ausspeicherung eingeleitet, was durch den Pfeil am umrandeten Informationseintrag (E1) angedeutet ist. Der Sperreintrag F ist damit vom Speicherelement EL3 an das zyklisch nachfolgende Speicherelement EL1 weitergegeben worden, so daß eine nachfolgende dritte Zwischenspeicherungsanforderung über den Eintragszeiger EP3 nicht mehr abgewiesen, sondern dem Speicherelement EL1 zugeleitet wird.

Eine nachfolgende vierte Zwischenspeicherungsanforderung über den Eintragszeiger EP4 würde dagegen wieder abgewiesen. Diese käme gemäß FIG 3 erst zum Zuge, wenn der Austragszeiger AP1 am Ende der ersten Ausspeicherung auf den Austragszeiger AP2 umgestellt und dazu eine neue Ausspeicherungsanforderung eingetroffen ist, der zufolge die zweite Ausspeicherung bereits eingeleitet wäre; usw..

Zur Ansteuerung der Warteschlange sind also lediglich zwei Speicherabschnitte, z.B. Register, zur Bereitstellung des Eintragszeigers EP... und des Austragszeigers AP... erforderlich. Trifft eine Zwischenspeicherungsanforderung ein, kann mit Hilfe des aktuellen Eintragszeigers EP... sofort das zugehörige Speicherelement EL... aufgerufen und anhand des Adresseneintrags im Steuereintragsfeld CONTF auf das zu belegende Speicherelement zugegriffen werden oder die Anforderung wird aufgrund des Sperreintrags F zurückgewiesen. Andererseits erreicht man bei einer Ausspeicherungsanforderung anhand des aktuellen Austragszeigers AP... unmittelbar das Speicherelement, das als erstes zur Ausspeicherung von Informationen ansteht. Ist dieses nicht belegt, was zweckmäßig anhand des Eintragsfeldes F/B zu Beginn des Datenfeldes DF überprüft wird, kann keine Ausspeicherung vorgenommen werden. Dann liegt aber auch in den anderen Speicherelementen EL... der Warteschlange keine Zwischenspeicherung vor. Ist das Datenfeld dagegen belegt, erfolgt vor der eigentlichen Ausspeicherung zweckmäßig die Weitergabe der Sperreintrags, um das bisher gesperrte Speicherelement schneller für eine weitere Zwischenspeicherungsanforderung verfügbar zu machen.

Die von der Weitergabe des Sperreintrags F betroffenen Speicherelemente EL... und Eintragsfelder sind in FIG 2 und FIG 3 durch Eckdreiecke gekennzeichnet. Zunächst wird im durch den Austragszeiger AP... aufgefundenen Speicherelement als Speicherelement ELn anhand des Adresseneintrags AD-VEL das vorangehende Speicherelement ELn-1 ermittelt und im Steuereintragsfeld CONTF der Sperreintrag F vorgenommen. Danach wird anhand der Adresse AD-VEL in diesem Speicherelement das vorangehende Speicherelement ELn-2 ermittelt und dort die Adresse AD-NEL aus dem dortigen Adresseneintragsfeld in das Steuereintragsfeld CONTF übertragen. Der Sperreintrag in diesem Steuereintragsfeld ist damit gelöscht. Stattdessen wird auf das Element ELn-1 als aufnahmebereites Speicherelement verwiesen.

Der Steuerungsaufwand hierfür ist verhältnismäßig gering und kann bei zweckmäßig programmgesteuerten Einrichtungen in einfacher Weise realisiert werden.

In vielen Anwendungsfällen ist die Länge der Warteschlangen nicht von vornherein absehbar. Ist die Anzahl der vorgegebenen Speicherelemente zu klein gewählt, läuft man Gefahr, daß zuviele Zwischenspeicherungsanforderungen abgewiesen werden müssen. Ist dagegen die Anzahl zu groß, wird unnötige Speicherkapazität gebunden. Es ist daher vorteilhaft, wenn die Warteschlange entsprechend den jeweiligen betrieblichen Erfordernissen hinsichtlich der Anzahl ihrer Speicherelemente erweiterbar ist.

Dieses Erfordernis läßt sich bei dem gegebenen Lösungsprinzip gemäß der Erfindung in einfacher Weise erfüllen. Erforderlich ist dazu lediglich, daß der jeweilige Sperreintrag F nicht mehr zu einer Zurückweisung einer Zwischenspeicherungsanforderung führt, sondern zur Einkettung eines neuen Speicherelementes, das dann die durch die neue Zwischenspeicherungsanforderung bedingte Zwischenspeicherung ermöglicht.

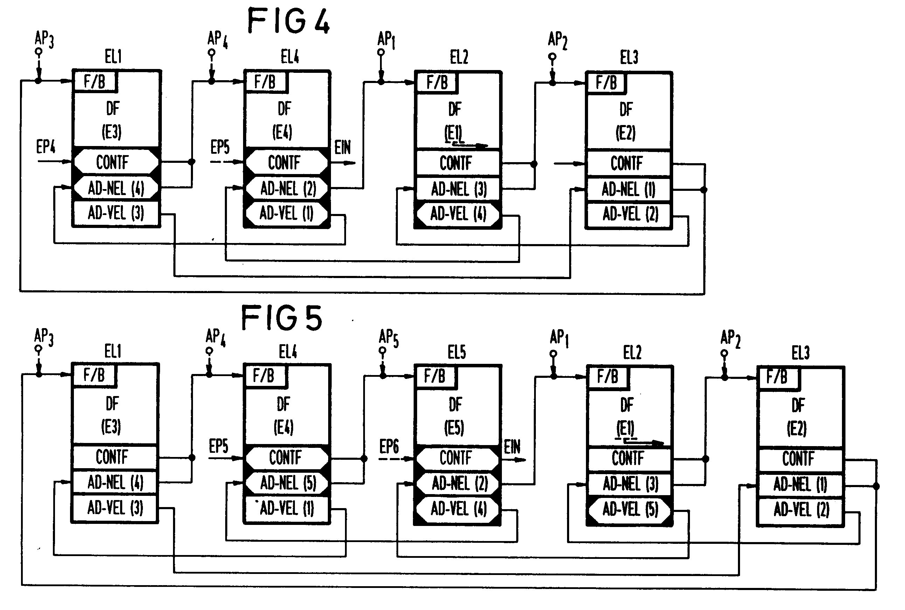

Dieser Fall ist ausgehend von der Warteschlange gemäß FIG 2 in FIG 4 dargestellt. Die auf den Eintragszeiger EP4 bezogene Zwischenspeicherungsanforderung führt in diesem Falle nicht zu einer Zurückweisung der Zwischenspeicherungsanforderung, sondern aufgrund des Eintrags EIN im angesteuerten Steuereintragsfeld zum Einketten eines vierten Speicherelementes EL4 in die Warteschlange. Bevor dieses Speicherelement EL4 zur Aufnahme der neuen Information (E4) bereitgestellt werden kann, müssen jedoch die Einträge in den jeweils betroffenen Speicherelmenten ergänzt bzw. geändert werden.

Betroffen sind jeweils drei Speicherelemente, nämlich das neu einzukettende Speicherelement EL4, das die Einkettung auslösende Speicherelement EL1 und das diesem bisher nachfolgende Speicherelement EL2. Die betroffenen Eintragsfelder dieser Speicherelemente EL4, EL1 und EL2 sind wiederum mit Eckdreiecken gekennzeichnet.

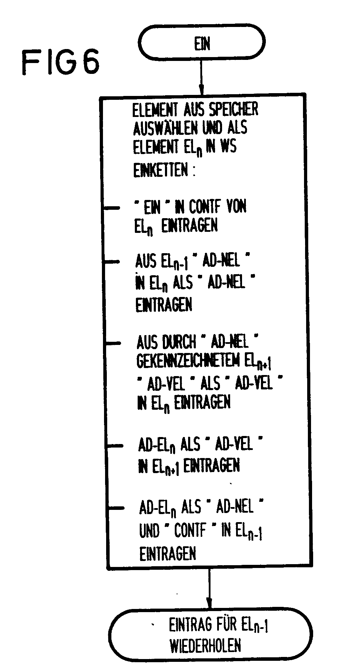

Der Steuerungsablauf für die damit verbundene Einkettungroutine ergibt sich aus FIG 6.

Danach wird zunächst im Speicher ein verfügbares Speicherelement ELn ausgewählt und in dessen Steuereintragsfeld CONTF der Einkettungshinweis "EIN" eingetragen. In dem durch den aktuellen Eintragszeiger, z.B. EP4, gekennzeichneten Speicherelement, z.B. EL1 als ELn-1, wird dann das Adresseneintragsfeld für die Vorwärtsadresse AD-NEL gelesen und in das entsprechende Eintragsfeld des neuen Speicherelementes ELn = EL4 eingetragen. Weiterhin wird das durch diesen Eintrag gekennzeichnete bisherige Nachfolgeelement EL2 als Speicherelement ELn+1 angesteuert, die dortige Rückwärtsadresse AD-VEL gelesen und in das entsprechende Eintragsfeld des neuen Speicherelementes EL4 = ELn übertragen, während in das gelesene Adresseneintragsfeld des Speicherelementes EL2 als ELn+1 die Adresse des neuen Speicherelementes EL4 als AD-VEL eingetragen wird. Anschließend wird noch im durch den Eintragszeiger EP4 gekennzeichneten Speicherelement EL1 als Speicherelement ELn-1 die Hinweisadresse auf das neu eingekettete Speicherelement EL4 in das Eintragsfeld für die Vorwärtsadresse AD-NEL und in das Steuereintragsfeld CONTF eingetragen. Das neue Speicherelement EL4 ist damit in die bestehende Kette eingegliedert, wobei durch die Übernahme des Sperreintrags in dieses Element das bisher sperrende Speicherelement EL1 die Entgegennahme der mit dem Eintragszeiger EP4 verbundenen vierten Zwischenspeicherungsanforderung bei Wiederholung zuläßt.

FIG 5 zeigt schließlich die Entwicklung der Warteschlange von FIG 4, wenn nach dem Einketten des Speicherelementes EL4 und dessen Belegung eine weitere auf den Eintragszeiger EP5 bezogene fünfte Zwischenspeicherungsanforderung eintrifft, bevor der durch den Austragszeiger AP1 ausgelöste Ausspeichervorgang abgeschlossen und auf den neuen Austragszeiger AP2 umgesteuert ist. In diesem Falle wird wie bei FIG 4 erst ein weiteres Speicherelement EL5 eingekettet, das dann die auf den Eintragszeiger EP5 bezogene Zwischenspeicherungsanforderung bedienen kann.

In gleicher Weise können frei werdende Speicherelemente auch wieder ausgekettet werden. Ausgangspunkt hierfür ist eine Überprüfung des jeweils nächstfolgenden Speicherelementes, auf das der Adresseneintrag AD-NEL für die Vorwärtsverknüpfung hinweist und auf das der Austragszeiger AP... nach Freigabe eines Speicherelementes einzustellen ist. Ist nämlich dieses Speicherelement nicht mehr belegt, dann sind voraussetzungsgemäß auch alle übrigen Speicherelemente der Warteschlange nicht belegt. Das freigewordene Speicherelement kann daher ausgekettet werden, wenn die Anzahl der Speicherelemente in der Warteschlange größer ist als die erforderliche Mindestanzahl von zwei Speicherelementen. Dies läßt sich in einfacher Weise daran erkennen, ob die beiden Adresseneinträge im frei gewordenen oder auch im nachfolgenden Speicherelement übereinstimmen oder nicht. Nur im letzten Falle kann freigegeben werden.

Um bei der Auskettung eines Speicherelementes die Adressenverknüpfung innerhalb der Kette aufrechtzuerhalten, muß im auf das jeweils frei gewordene Speicherelement n vorangehenden Speicherelement n+1 der Adresseneintrag AD-VEL für die Rückwärtsverknüpfung auf den des frei werdenden Speicherelementes n und im durch diesen Adresseneintrag bestimmten nachfolgenden Speicherelement n-1 der Adresseneintrag AD-NEL für die Vorwärtsverknüpfung auf den des frei werdenden Speicherelementes n umgestellt werden. Nach der Auskettung eines Speicherelementes wird der Austragszeiger auf das nächstfolgende Speicherelement umgestellt. Der Auskettungsvorgang kann dann gegebenenfalls wiederholt werden, bis schließlich keine Auskettung mehr möglich ist.

Die Einkettung eines neuen Speicherelementes und gegebenenfalls die Auskettung eines Speicherelementes erfordern zwar einen zusätzlichen Steuerungsaufwand in Form einer zusätzlichen Einkettungsroutine bzw. zusätzliche Steuervorgänge. Dieser Aufwand fällt aber gegenüber den durch die dynamische Anpassungsmöglichkeit gegebenen Vorteilen nicht weiter ins Gewicht, da in vielen Fällen die notwendige Reaktion auf eine abgewiesene Zwischenspeicherungsanforderung wesentlich größere Belastungen und Zeitverluste verursacht.

## Patentansprüche

1. Warteschlange, bestehend aus mehreren Speicherelementen (z.B. EL1 - EL3) zur Zwischenspeicherung von an einen Empfänger weiterzuleitenden Informationen und einer Steuerung für die Ein- und Ausspeicherung der Informationen, wobei die Informationen in der Reihenfolge ihrer Zwischenspeicherung weitergeleitet werden (FIFO-Prinzip),
**dadurch gekennzeichnet,**
- daß die Warteschlange aus frei verfügbaren Speicherelementen (z.B. EL1 bis EL3) einer gemeinsamen Speichereinheit gebildet ist, die durch einen auf das jeweils nächste Speicherelement verweisenden Adresseneintrag (AD-NEL) und durch einen auf das jeweils vorhergehende Speicherelement verweisenden Adresseneintrag (AD-VEL) zu einer Ringkette verknüpft sind,
- daß jedes Speicherelement (EL...) neben einem Datenfeld (DF) und den beiden Adresseneinträgen (AD-NEL und AD-VEL) ein weiteres Steuereintragsfeld (CONTF) aufweist, das abhängig vom Belegungszustand der Warteschlange entweder entsprechend dem auf das nächste Speicherelement verweisenden Adresseneintrag (AD-NEL) ebenfalls auf das nächste Speicherelement verweist, wenn dieses zur Zwischenspeicherung bereit ist, oder aber einen die Zwischenspeicherung von weiteren Informationen verhindernden Sperreintrag (F) enthält,
- daß ein die Einspeicherung von Informationen steuernder Eintragszeiger (EP...) immer auf das Steuereintragsfeld (CONTF) des Speicherelementes (z.B. EL1) zeigt, das dem die einzuspeichernde Information aufnehmenden Speicherelement (z.B. EL2) vorangeht, während ein die Weiterleitung der Informationen steuernder Austragszeiger (AP...) immer auf den Beginn des die zwischengespeicherte Information beinhaltenden Datenfeldes (DF) eines Speicherelementes ( z.B. EL2) zeigt, dessen Information als erste von allen gespeicherten weiterzuleiten ist, wobei der Eintragszeiger (EP...) nach jedem Eintrag einer Information und der Austragszeiger (AP...) nach jeder Weiterleitung einer Information durch die Warteschlangensteuerung auf das Speicherelement eingestellt wird, das durch den in Vorwärtsrichtung der Kette verweisenden Adresseneintrag (AD-NEL) bestimmt ist.

2. Warteschlange nach Anspruch 1,
**dadurch gekennzeichnet,** daß zu Beginn eines Datenfeldes (DF) im jeweiligen Speicherelement (z.B. E1) ein Eintragsfeld (F/B) zur Kennzeichnung des Frei- oder Belegtzustandes des Datenfeldes (DF) und damit des Speicherelementes (EL1) vorgesehen ist.

3. Warteschlange nach Anspruch 1 oder 2,
**dadurch gekennzeichnet,** daß nach Ansteuerung eines durch den Austragszeiger (z.B. AP1) gekennzeichneten Speicherelementes (z.B. EL2) durch die Warteschlangensteuerung zwecks Weiterleitung der zwischengespeicherten Information noch vor Beginn der eigentlichen Weiterleitung der Information aus dem Datenfeld (DF) ein im Steuereintragsfeld (CONTF) des dem durch den Austragszeiger (AP1) gekennzeichneten Speicherelement (EL2) in der Kette vorangehenden vorletzten Speicherelementes (EL3) enthaltene Sperreintrag (F) in das Steuereintragsfeld (CONTF) des letzten Speicherelementes (EL1) übertragen wird, so daß noch vor der Freigabe des durch den Austragszeiger (AP1) gekennzeichneten Speicherelementes (EL2) nach Weiterleitung der dort zwischengespeicherten Information das letzte Speicherelement (EL1) der Kette zur Zwischenspeicherung einer weiteren Information zur Verfügung steht.

4. Warteschlange nach einem der Ansprüche 1 bis 3,
**dadurch gekennzeichnet,** daß die Warteschlange jeweils bei Ansteuerung eines Steuereintragsfeldes (CONTF) mit Sperreintrag (F) durch die Warteschlangensteuerung um ein weiteres verfügbares Element (z.B. EL4 oder EL5) aus der gemeinsamen Speichereinheit erweiterbar ist, wobei das neue Speicherelement (z.B. EL4) jeweils als nächstfolgendes nach dem den Sperreintrag liefernden Speicherelement (z.B. E1) in die Kette eingefügt und der Sperreintrag an das Steuereintragsfeld (CONTF) des neuen Speicherelementes (z.B. EL4) übernommen wird, sowie die Adresseneinträge (AD-NEL und AD-VEL) anhand der vorhandenen Adressenverknüpfungen zur Aufrechterhaltung der Ringstruktur geändert werden.

5. Warteschlange nach Anspruch 4,
**dadurch gekennzeichnet,** daß mit dem auf das nächstfolgende Speicherelement (z.B. EL3) nach Weiterleitung einer Information eingestellten Austragszeiger (AP2) der Belegungszustand dieses nächstfolgenden Speicherelementes überprüft wird, daß bei unbelegt gefundenem Speicherelement auch die beiden Adresseneinträge (AD-NEL, AD-VEL) dieses oder des frei gewordenen Speicherelementes (EL3 bzw. EL2) überprüft werden, daß bei voneinander abweichenden Adresseneinträgen das freigegebene Speicherelement (EL2) aus der Warteschlange ausgekettet wird, indem der Adresseneintrag (AD-VEL) für die Rückwärtsverknüpfung des auszukettenden Speicherelements (EL2) als solcher beim Überprüften nächstfolgenden Speicherelement (EL3) eingetragen wird, und daß anschließend das durch diesen Adresseneintrag gekennzeichnete nächstvorangehende Speicherelement (EL1) aufgesucht und dort der Adresseneintrag (AD-NEL) für die Vorwärtsverknüpfung aus dem auszukettenden Speicherglied (E2) als solcher eingetragen wird.

## Claims

1. Queue comprising a plurality of memory elements (for example EL1 - EL3) for buffering information to be forwarded to a receiver and a controller for the storage and removal of the information, the information being forwarded in the order of its buffering (FIFO principle), characterized
- in that the queue is formed from freely available memory elements (for example EL1 to EL3) of a common memory unit, which are linked to form a ring chain by means of an address entry (AD-NEL) that points to the respective next memory element and by means of an address entry (AD-VEL) that points to the respective preceding memory element,
- in that, in addition to a data field (DF) and the two address entries (AD-NEL and AD-VEL), each memory element (EL...) has a further control entry field (CONTF) which, depending on the occupancy state of the queue, either also points to the next memory element, if the latter is available for buffering, in accordance with the address entry (AD-NEL) pointing to the next memory element, or else contains a lock entry (F) preventing the buffering of further information,
- in that an entry pointer (EP...) controlling the storage of information always points to the control entry field (CONTF) of the memory element (for example EL1) that precedes the memory element (for example EL2) receiving the information to be stored, while a removal pointer (AP...) controlling the forwarding of the information always points to the beginning of the data field (DF), containing the buffered information, of a memory element (for example EL2) whose information is to be forwarded first from all the stored information, after each entry of information the entry pointer (EP...) being set and after each forwarding of information the removal pointer (AP...) being set by the queue controller to the memory element defined by the address entry (AD-NEL) pointing in forwards direction of the chain.

2. Queue according to Claim 1, characterised in that an entry field (F/B) for indicating the free or occupied state of the data field (DF), and hence of the memory element (EL1), is provided at the beginning of a data field (DF) in the respective memory element (for example E1).

3. Queue according to Claim 1 or 2, characterised in that after a memory element (for example EL2) indicated by the removal pointer (for example AP1) has been addressed by the queue controller for the purpose of forwarding the buffered information, even before the commencement of the actual forwarding of the information from the data field (DF), a lock entry (F) contained in the control entry field (CONTF) of the penultimate memory element (EL3) that precedes the memory element (EL2) in the chain and is indicated by the removal pointer (AP1) is transferred into the control entry field (CONTF) of the last memory element (EL1), so that even before the release of the memory element (EL2) indicated by the removal pointer (AP1), after forwarding of the information buffered there, the last memory element (EL1) of the chain is available for buffering further information.

4. Queue according to one of Claims 1 to 3, characterised in that in each case when a control entry field (CONTF) with lock entry (F) is addressed by the queue controller, the queue can be extended by one further available element (for example EL4 or EL5) from the common memory unit, the new memory element (for example EL4) being inserted into the chain in each case as the one immediately following after the memory element (for example EL1) supplying the lock entry, and the lock entry being transferred to the control entry field (CONTF) of the new memory element (for example EL4), and also the address entries (AD-NEL and AD-VEL) being changed on the basis of the existing address links to maintain the ring structure.

5. Queue according to Claim 4, characterised in that, with the removal pointer (AP2) set to the immediately following memory element (for example EL3) after forwarding information, the occupancy state of said immediately following memory element is checked, in that if the memory element is found to be unoccupied, the two address entries (AD-NEL, AD-VEL) of said memory element or of the memory element (EL3 or EL2) that has been released are also checked, in that in the case of address entries differing from one another, the released memory element (EL2) is removed from the queue by entering as such the address entry (AD-VEL) for the backwards linking of the memory element (EL2) to be removed from the chain at the checked, immediately following memory element (EL3), and in that the immediately preceding memory element (EL1) indicated by said address entry is subsequently sought and the address entry (AD-NEL) for the forwards linking from the memory element (EL2) to be removed from the chain is entered there as such.

## Revendications

1. File d'attente, constituée de plusieurs éléments de mémoire (par exemple EL1-EL3) pour la mémorisation temporaire d'informations à transmettre à un récepteur, et d'une unité de commande pour la mémorisation et la lecture des informations, ces dernières étant transmises dans l'ordre de leur mémorisation temporaire (principe FIFO),
caractérisée par le fait
- que la file d'attente est formée d'éléments de mémoire, librement disponibles, (par exemple EL1 à EL3) d'une unité de mémoire commune, qui sont enchaînés librement et qui sont reliés en une chaîne formant boucle, à l'aide d'un enregistrement d'adresse (AD-NEL) faisant renvoi à l'élément de mémoire respectivement suivant et d'un enregistrement d'adresse (AD-VEL) faisant renvoi à l'élément de mémoire respectivement précédent,
- que chaque élément de mémoire (EL...) comporte, outre un champ de données (DF) et les deux enregistrements d'adresses (AD-NEL et AD-VEL), un champ d'enregistrement de commande supplémentaire (CONTF), qui, en fonction de l'état d'occupation de la file d'attente, soit fait renvoi, en fonction de l'enregistrement d'adresses (AD-NEL) faisant renvoi à l'élément de mémoire suivant, également à l'élément de mémoire suivant, si celui-ci est prêt à la mémorisation temporaire, soit comporte un enregistrement de blocage (F) qui empêche la mémorisation temporaire des autres informations,
- qu'un indicateur d'enregistrement (EP...) qui commande la mémorisation des informations, indique toujours le champ d'enregistrement de commande (CONTF) de l'élément de mémoire (par exemple EL1), qui précède l'élément de mémoire (par exemple EL2) recevant l'information à mémoriser, alors qu'un indicateur de déchargement (AP...) qui commande la transmission des informations, indique toujours le début du champ de données (DF) d'un élément de mémoire (par exemple EL2), qui comporte l'information mémorisée temporairement, et dont l'information est à transmettre comme première de toutes les informations mémorisées, l'indicateur d'enregistrement (EP...) étant réglé après chaque enregistrement d'une information et l'indicateur de déchargement (AP...) étant réglé après chaque déchargement d'une information, par la commande de la file d'attente, sur l'élément de mémoire qui est déterminé par l'enregistrement d'adresse (AD-NEL) faisant renvoi dans le sens progressif ou direct de la chaîne.

2. File d'attente suivant la revendication 1, caractérisée par le fait qu'au début d'un champ de données (DF), il est prévu, dans l'élément de mémoire respectif (par exemple EL1), un champ d'enregistrement (F/B) pour caractériser l'état libre ou occupé du champ de données (DF) et donc, de l'élément de mémoire (EL1).

3. File d'attente suivant la revendication 1 ou 2, caractérisée par le fait qu'après l'excitation d'un élément de mémoire (par exemple EL2) signalé par l'indicateur de déchargement (par exemple AP1), par la commande de la file d'attente pour la transmission de l'information mémorisée temporairement, et dès avant le début de la transmission proprement dite de l'information à partir du champ de données (DF), un enregistrement de blocage (F) contenu dans le champ d'enregistrement de commande (CONTF) de l'avant-dernier élément de mémoire (EL3) précédant, dans la chaîne, l'élément de mémoire (EL2) signalé par l'indicateur de déchargement (AP1), est transmis dans le champ d'enregistrement de commande (CONTF) du dernier élément de mémoire (EL1), en sorte que, dès avant la libération de l'élément de mémoire (EL2) signalé par l'indicateur de déchargement (AP1), le dernier élément de mémoire (EL1) de la chaîne reste, après la transmission de l'information mémorisée temporairement dans l'élément de mémoire (EL2), disponible pour la mémorisation temporaire d'une autre information.

4. File d'attente suivant l'une des revendications 1 à 3, caractérisé par le fait que, lors de l'excitation d'un champ d'enregistrement de commande (CONTF) à enregistrement de blocage (F), la file d'attente est susceptible d'extension, par la commande de la file d'attente, d'un élément supplémentaire (par exemple EL4 ou EL5) disponible de l'unité de mémoire commune, le nouvel élément de mémoire (par exemple EL4) étant inséré dans la chaîne, comme élément qui suit l'élément de mémoire (par exemple EL1) fournissant l'enregistrement de blocage, et l'enregistrement de blocage étant transmis au champ d'enregistrement de commande (CONTF) du nouvel élément de mémoire (par exemple EL4), alors que les enregistrements d'adresses (AD-NEL et AD-VEL) sont modifiés, à partir des combinaisons des adresses présentes, pour maintenir la structure en boucle.

5. File d'attente suivant la revendication 4, caractérisée par le fait que, à l'aide de l'indicateur de déchargement (AP2) réglé, après la transmission d'une information, sur l'élément de mémoire suivant (par exemple EL3), l'état d'occupation de cet élément de mémoire suivant est vérifié, que, dans l'élément de mémoire trouvé inoccupé, sont également contrôlés les deux enregistrements d'adresses (AD-NEL, AD-VEL) de ce dernier ou de l'élément de mémoire (EL3 ou EL2) devenu libre, que, dans le cas d'enregistrements d'adresses qui différent entre eux, l'élément de mémoire (EL2) libéré est retiré de la chaîne de la file d'attente, grâce au fait que l'enregistrement d'adresse (AD-VEL) pour la rétro-combinaison de l'élément de mémoire (EL2) à retirer de la chaîne, est enregistré comme tel lors du contrôle de l'élément de mémoire (EL3) suivant, et qu'ensuite, l'élément de mémoire (EL1) immédiatement précédent, signalé par cet enregistrement d'adresses, est recherché, et l'enregistrement d'adresses (AD-NEL) pour la liaison avale vers l'élément de mémoire (EL2) à retirer de la chaîne, y est enregistré comme tel.
